# EUROPEAN PATENT APPLICATION

(11) **EP 2 893 818 A2**
(43) Date of publication of application: **15.07.2015**
(21) Application number: 13835168.9
(22) Date of filing: 26.08.2013
(51) Int. Cl.: A23L 1/315, A23L 1/176, A23L 1/01

(54) **ROAST CHICKEN PREPARATION METHOD**

(30) Priority: 07.09.2012 KR 20120099139
(71) Applicant: Park, Chung Man, Jeollanam-do 520-280 (KR)
(72) Inventor: Park, Chung Man, Jeollanam-do 520-280 (KR)
(74) Representative: Hocking, Adrian Niall
(86) International application number: PCT/KR2013/007639
(87) International publication number: WO 2014/038806

(57) **Abstract**

The present invention relates to a roast chicken preparation method, and more specifically relates to a roast chicken preparation method in which an uncooked chicken is pre-seasoned by rubbing in, putting on pre-seasoning ingredients such as garlic and red pepper powder salt, then the smell of chicken meat is removed by carrying out a meat-tenderization process via low temperature refrigerated maturation, then a batter coating is put on with a batter flour obtained by mixing wheat flour and corn starch with salt, pepper, garlic powder, whole peppers, ginger powder, chili powder or the like and frying is carried out in a mixed oil, and then the oil is taken off and roasting is carried out using a grill briquette direct flame fire, such that the roast chicken is one wherein greasiness has been removed by subjecting a chicken from a fried chicken step to a briquette direct flame roasting step; and the invention is useful in that greasiness is removed and clings less than with common fried chickens, the risk of taking in large volumes of cholesterol is overcome, storage properties after preparation are improved, and a crispy flavour is achieved even though the inside is moist and soft as the water fraction in the meat juices is conserved.

## Description

### Technical Field

The present invention relates to a roast chicken preparation method, and in particular to a roast chicken which may provide a moist meat juice and a chewy meat taste and flavor of a chicken meat.

### Background Art

A chicken fried in a chicken cooking oil and a sauced chicken and a barbecued chicken roasted in an oven or on a direct flame fire in general are prepared and available in the market.

The fried chicken is put on with a variety of sauces including a frying flour and is fried in an oil and the sauced chicken tastes crispy and sweet just after the cooking, but after a predetermined long time passes by, the storing and crispy tastes become bad because of oxidizing greasiness, and the tastes become creasy, so the texture of food may be degraded.

In case of the above-mentioned fried chicken, the fried chicken contains a lot of cholesterol, so eating a lot of the fried chicken may entail the occurrence of various adult diseases.

In the barbecued chicken roasted in an oven or on a direct flame fire, the fried meat may be ripened in a marinade for a predetermined time and may be roasted on a direct flame fire and may be put on with a sauce or the fried meat may be roasted on a direct flame fire while putting on a sauce or the chicken meat pieces roasted on a direct flame fire may be mixed in a sauce and may be served to customers. In this case, the greasiness is low as compared with the fried chicken, but the chewy taste based on the meat juice is bad.

According to the Korean Patent Publication No. 10-2011-0061858(A1) filed on June 10, 2011 which is one of the prior art in Korea and foreign countries, it describes a roast chicken sauce which is made based on a roast chicken preparation method and its manufacturing method which includes a mixing process formed of a first mixing step wherein salt, sugar, and chemical ingredients are mixed, a second mixing step wherein to the mixture mixed in the first mixing step, paprika and olive oil are added, and the oil is well mixed, and a third mixing step wherein to the mixture mixed in the second mixing step, onion powder, garlic powder, pepper powder, and phosphate are inputted and mixed, however it does not describes any exemplary embodiment on roasting the roast chicken on a direct flame fire or in an oven. It also describes removing fat smell and any meat toxic, preparing tender meat texture and deepening flavor of chicken, but any specific examples for estimating chewy texture or shapes are not disclosed.

In addition, according to the Korean Patent Registration No. 10-0978515(B1) entitled "Barbecue chicken preparation method" filed on August 23, 2010, it describes that chicken meat chopped into predetermined size pieces are mixed with kiwi fruit juice, garlic soy bean sauce, wine, a first Cheongyang red pepper powder, a first ordinary red pepper powder, a first drinkable water, smashed garlic, and Soju and are ripened for 10-24 hours, and the chicken mean is taken out from the ripened mixture is roasted on a direct flame fire, and the roasted chicken meat is uniformly applied with a sauce which is prepared by mixing and boiling for 10-15 minutes starch syrup, tomato ketchup, a second Cheongyang red pepper powder, a second ordinary red pepper powder, sesame, skewer soy bean sauce, teriyaki sauce, and a second drinkable water. The thusly prepared barbecue chicken has a good chewy texture thanks to lowered greasiness as compared with the fried chicken, but the chewy texture based on meat juice becomes worse as compared with the fried chicken as time passes by after the cooking.

Meanwhile, according to the Korean Patent Registration No. 10-0655179(B1) entitled "medicinal herb-based fried chicken preparation method and a medicinal herb-based chicken prepared by the same" filed on December 1, 2006, it is characterized in that the fried chicken is prepared through a batter-dip procedure wherein a chicken or chicken legs coated with medicinal herb-based batter made in a form of fine powder ground using a grinder and filtered with a sieve with a mesh of 80-120 is fried in an automatic frying machine at 170∼185°C for thereby coating the chicken meat. In this case, oil does not penetrate during the cooking, and the moisture of the chicken meat may be kept, so it is possible to prepare a moist and tender fried chicken along with a crispy taste, but like the ordinary fried chicken, when eating a lot of such fried chickens, an eater may take in a lot of cholesterol due to un-removed greasiness.

Meanwhile, according to the Korean Patent Registration No. 10-0473183(B1) entitled "sauced chicken preparation method" filed on February 15, 2005, it is characterized in that sesame flavor and animal separation protein and beef leg bone liquid essence are inputted and agitated, thus preventing any destruction of nutrients heated at a predetermined temperature, and a separately packed marinade chicken sauce is ripen in a refrigerator storage at 4°C, for thereby improving flavor, and a source meat processed with a pickle solution seasoning is cut, and the moisture inside of the meat is removed in the refrigerator storage at 4°C for thereby preventing the remaining of over moisture, and oxidation-free product may be prepared using hydrogenated soybean oil added with natural tocopherol and silicon oil while improving the function as an antifoaming agent. However, since the above fried chicken preparation method includes the last step wherein the chicken is fried in oil, if an eater eats a lot of such fried chicken, the eat may taken in a lot of cholesterol because of the un-removed greasiness like the ordinary fried chicken.

### [Prior Art Documents]

### [Patent Documents]

(Patent Document 1) [Document 1] KR 10-2011-0061858(A) June 10, 2011
(Patent Document 2) [Document 2] KR 10-0978515 (B1) August 23, 2010
(Patent Document 3) [Document 3] KR 10-0655179(B1) December 1, 2006
(Patent Document 4) [Document 4] KR 10-0473183(B1) February 15, 2005

### Disclosure of Invention

The preparation method of the roast chicken according to the present invention is made given the above-described problems and is characterized in that a pre-seasoned ingredient such as garlic, red pepper powder, salt, etc. is added, and uncooked chicken is pre-seasoned while rubbing, and a meat tenderization is carried out through a low temperature refrigerator-based ripening, thus eliminating the smell of chicken meat, and a coating is carried out using a batter flour made by mixing flour and corn starch with salt, pepper, garlic powder, whole pepper, ginger powder, red pepper powder, etc., and the coated chicken is fried in blended oil, and the oil is taken off, and the chicken is roasted on a direct flame fire, for which oxidation may be free, and greasiness is eliminated, and it is possible to avoid any staining and the intake of a lot of cholesterol, and the storing performance after cooking is good, and storing is also good. Since the moisture in the meat juice may be kept inside, the roast chicken may be moist, tender and crispy flavor.

To achieve the above objects, there is provided a roast chicken preparation method including a first step wherein uncooked chicken of 650∼750g cut into pieces of predetermined sizes is added, for pre-seasoning, with 4 spoons of smashed garlic of a first addition, 4 spoons of red pepper powder of a first addition, and 1 spoon of salt of a first addition and is rubbed;
a second step wherein the pre-seasoned pieces of the uncooked chicken is refrigerated and ripen for 2 hours at a low temperature of 0∼5°C;
a third step wherein the chicken is put on with a batter formed of a batter flour made by blending 70wt% of weak flour, 27wt% of corn starch, 0.5wt% of salt of a second addition, 0.5wt% of pepper, 0.5wt% of smashed garlic of a second addition, 0.5wt% of whole pepper, 0.5wt% of ginger powder, and 0.5wt% of red pepper powder of a second addition;
a fourth step wherein a frying oil is made by blending 20wt% of soybean oil, 10wt% of rapeseed and 70wt% of coconut oil;
a fifth step wherein the pieces of the uncooked chicken of the third step, which are put on with a batter, are fried in a frying oil of 165∼170°C for 11∼15 minutes; and
the last step wherein the oil is taken off from the fried pieces of the chicken, and the chicken pieces are put on a grill and are processed through a briquette direct flame fire for 5~7 minutes.

### Advantageous effects

The roast chicken according to the present invention is secured based on a preparation method of a roast chicken through a briquette-based direct roasting step wherein oil is taken off the fried chicken, and the chicken is putted on a grill. In the fried chicken step, the chicken is crispy and sweet just after the cooking. When a predetermined time passes by, the chicken may be oxidized, so storing and crispy taste go bad, and the smell of fat increases, thus lowering chewy texture. In the present invention, the pieces of the fried chicken are put on the grill, and the oil is oxidized in the briquette-based direct roasting step, so the chicken becomes more crispy, and the chewing and storing preferences may be more improved, and the moist meat juice of the chicken may be secured, and the chewy meat taste and deep flavor may be improved.

### Brief Description of Drawings

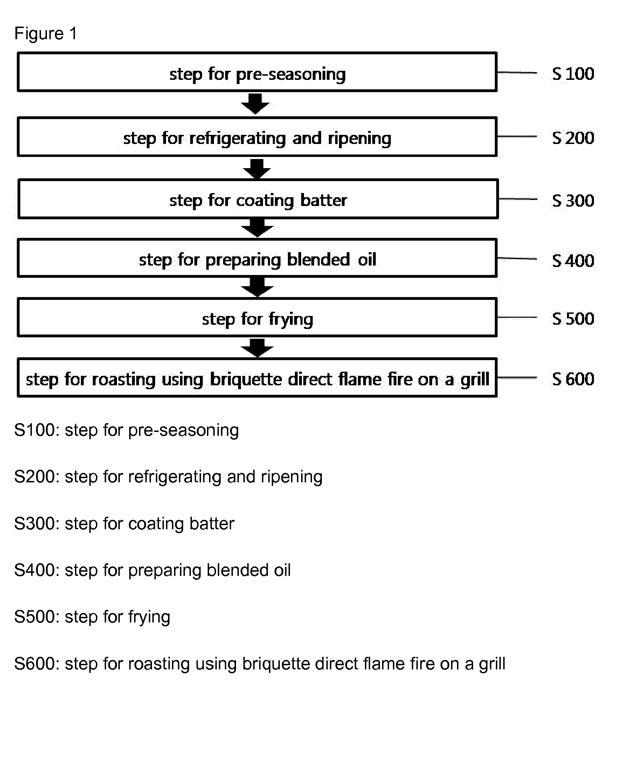

Figure 1 is a view for describing a preparation process according to the present invention.

### Best modes for carrying out the invention

The preparation method according to an exemplary embodiment of the present invention for achieving the above objects will be described with reference to the accompanying drawings.

There is provided a roast chicken preparation method including a first step wherein uncooked chicken of 650∼750g cut into pieces of predetermined sizes is added, for pre-seasoning, with 4 spoons of smashed garlic of a first addition, 4 spoons of red pepper powder of a first addition, and 1 spoon of salt of a first addition and is rubbed;
a second step wherein the pre-seasoned pieces of the uncooked chicken is refrigerated and ripen for 2 hours at a low temperature of 0∼5°C;
a third step wherein the chicken is put on with a batter formed of a batter flour made by blending 70wt% of weak flour, 27wt% of corn starch, 0.5wt% of salt of a second addition, 0.5wt% of pepper, 0.5wt% of smashed garlic of a second addition, 0.5wt% of whole pepper, 0.5wt% of ginger powder, and 0.5wt% of red pepper powder of a second addition;
a fourth step wherein a frying oil is made by blending 20wt% of soybean oil, 10wt% of rapeseed and 70wt% of coconut oil;
a fifth step wherein the pieces of the uncooked chicken of the third step, which are put on with a batter, are fried in a frying oil of 165∼170°C for 11∼15 minutes; and
the last step wherein the oil is taken off from the fried pieces of the chicken, and the chicken pieces are put on a grill and are processed through a briquette direct flame fire for 5-7 minutes.

The exemplary embodiment of the present invention will be described.

As for the chicken meat used in the present invention, the weight of the body except for a head and internal organs was 650∼750g which was categorized as the number-7 chicken. The chicken was cut into 10~12 pieces for easier test eating.

With respect to 650∼750g of the uncooked chicken, 4 tea spoons of mashed garlic of a first addition, 4 tea spoons of red pepper powder of a first addition, and 1 tea spoon of salt of a first addition are added and pre-seasoned while rubbing. Here, 1 tea spoon was about 5ml of a measured spoon based on one spoonful of 1 spoon, and the pre-seasoned sauces were well blended using the meat juice from the uncooked chicken during the rubbing procedure.

As for the mass production, the pre-seasoned chicken was inputted into a rotary blade container instead of rubbing the pre-seasoned chicken and was agitated or was processed in any one of the tumbling or the vacuum tumbling and the injection method.

The pieces of the pre-seasoned uncooked chicken were refrigerated and ripen for 12 hours at a low temperature of 0∼5°C, and the moisture was removed from the meat texture, and the smell of the chicken was eliminated through the meat tenderization.

Partially eliminating the moisture from the meat during the refrigerating and ripening procedure may improve a batter coating performance in the following stage.

In the following step, the batter flour was prepared by mixing 70wt% of weak flour, 27wt% of corn starch, 0.5wt% of salt of a second addition, 0.5wt% of pepper, 0.5wt% of smashed garlic of a second addition, 0.5wt% of whole pepper, 0.5wt% of ginger powder, and 0.5wt% of red pepper powder of a second addition.

In the above description, the salt of the first addition, the salt of the second addition, the smashed garlic of the first addition, the red pepper powder of the first addition, and the red pepper powder of the second addition were based on the cooking sequence using the same ingredient.

The corn starch was added as a betthase ingredient in order for the batter flour to coat well on the pieces of the chicken. The refrigerated and ripened pieces of the chicken were deepened against and covered with the prepared batter flour and were taken off, thus coating a batter flour.

The drying oil was made by properly blending 20wt% of soybean oil, 10wt% of rapeseed oil, and 70wt% of coconut oil. The higher the ratio of the rapeseed oil increased, the worse the smell was. Such oil was minimally added so as to increase the melting point of the frying oil. The coconut oil was added for the purpose of preventing the hardening of the sauce at a cold place. Foams were formed because of the presence of myristic acid and lauric acid contained in the coconut oil. The foams forming in the blended oil caused the formation of layers around the batter, so the milliard reaction was promoted on the surfaces of the batter thanks to smooth and efficient heat transfer, thus preparing yellowish roast chicken with enhanced flavor. As an example of the comparison, the preferences based on the mixing ratios of the blended oil were evaluated as seen in Table 1 after the sensory tests performed with respect to 50 persons using the samples which had various fried states by selecting one among the samples provided from the selected companies in Korea.

**Table 1**

| | Blended oil of the present invention | Examples of comparisons |
|---|---|---|
| Taste | ^{x}6.58^{b} | ^{x}6.12^{a} |
| Flavor | ^{zw}6.49^{b} | ^{w}6.18^{a} |
| Color | ^{x}6.47^{ab} | ^{x}6.00^{a} |
| Chewing | ^{xy}6.17^{ab} | ^{xy}5.51^{a} |
| Whole preferences | ^{x}6.51^{ab} | ^{x}6.10^{a} |

Meanwhile, Table 2 shows the whole preferences of the roast chicken according to the exemplary embodiment of the present invention formed of the example of the comparison of the step wherein the pieces of the uncooked chicken of the third step, which was put on with the batter in the frying oil of 165∼170°C, was fried for 11∼minutes, and the last step wherein the oil was taken off from the last fried pieces of the chicken, and the chicken was roasted on a briquette direct flame fire for 5-7 minutes.

**Table 2**

| | Roast chicken of the present invention | Examples of comparisons |
|---|---|---|
| Taste | ^{x}6.72^{b} | ^{x}6.25^{a} |
| Flavor | ^{zw}6.55^{b} | ^{w}6.38^{a} |
| Color | ^{x}6.25^{ab} | ^{x}6.36^{a} |
| Chewing | ^{xy}6.32^{ab} | ^{xy}6.25^{a} |
| Whole preferences | ^{x}6.49^{ab} | ^{x}6.31^{a} |

As described above, as compared with the fried chicken processed with the frying step, the roast chicken of the last step processed through the briquette direct flame fire on the rill has showed higher preferences, and it was possible to secure moister meat juice and chewy taste of the roast chicken along with deep flavor and better crispy and chewy tastes.

### [Legend of Reference Number]

S100: first step for pre-seasoning
S200: second step for refrigerating and ripening
S300: third step for coating batter
S400: fourth step for preparing blended oil
S500: fifth step for frying
S600: sixth step for briquette direct flame fire

## Claims

1. A roast chicken preparation method, comprising:
a first step wherein uncooked chicken of 650∼750g cut into pieces of predetermined sizes is added, for pre-seasoning, with 4 spoons of smashed garlic of a first addition, 4 spoons of red pepper powder of a first addition, and 1 spoon of salt of a first addition and is rubbed;
a second step wherein the pre-seasoned pieces of the uncooked chicken is refrigerated and ripen for 2 hours at a low temperature of 0∼5°C;
a third step wherein the chicken is put on with a batter formed of a batter flour made by blending 70wt% of weak flour, 27wt% of corn starch, 0.5wt% of salt of a second addition, 0.5wt% of pepper, 0.5wt% of smashed garlic of a second addition, 0.5wt% of whole pepper, 0.5wt% of ginger powder, and 0.5wt% of red pepper powder of a second addition;
a fourth step wherein a frying oil is made by blending 20wt% of soybean oil, 10wt% of rapeseed and 70wt% of coconut oil;
a fifth step wherein the pieces of the uncooked chicken of the third step, which are put on with a batter, are fried in a frying oil of 165∼170°C for 11~15 minutes; and
a sixth step wherein the oil is taken off from the fried pieces of the chicken, and the chicken pieces are put on a grill and are processed through a briquette direct flame fire for 5-7 minutes.
